Europäisches Patentamt

European Patent Office

Office européen des brevets

(11) Publication number: **0 096 098**

A1

# EUROPEAN PATENT APPLICATION

(21) Application number: 82105229.7

(22) Date of filing: 15.06.82

(51) Int. Cl.³: **A 61 G 5/04**
**B 62 D 51/04, B 60 K 1/02**

(43) Date of publication of application:
21.12.83 Bulletin 83/51

(84) Designated Contracting States:
AT BE CH DE FR IT LI LU NL SE

(71) Applicant: BIDDLE ENGINEERING COMPANY LIMITED
103 Stourbridge Road
Halesowen West Midlands B63 3UB(GB)

(72) Inventor: Gould, Royston Mervin
6 Moirfield Crescent Oakham Green
Tividale West Midlands(GB)

(72) Inventor: Hull, David Leslie
27 Dorchester Road Pedmore
Stourbridge West Midlands(GB)

(74) Representative: Lewis, Samuel Hewitt et al,
FORRESTER & BOEHMERT Widenmayerstrasse 4/1
D-8000 München 22(DE)

(54) Control means for an electrically powered vehicle.

(57) An electric vehicle, in particular a wheelchair for use by invalids, is provided with a "twist-grip" control (34,35) rotatable about its longitudinal axis in clockwise and anti-clockwise directions from an "at rest" position, such rotational movement from its "at rest" position causing a differential in the power supplied to motors driving respective sides of the wheelchair to cause the wheelchair to turn either to the left or to the right. A speed control lever (61) may be mounted on the "twist-grip" (34,35) to alter the speed at which the wheelchair may be driven. The twist-grip control (34,35) and speed control lever (61) may operate a plurality of switches or influence a solid state control circuit to control the amount of power supplied to the motors driving the wheelchair.

FIG. 2

EP 0 096 098 A1

Title: "Control means for an electrically powered
vehicle"

The present invention relates to control means for
controlling the operation of an electrically powered
vehicle.

The invention has particular, but not exclusive,
application to the control of an electrically powered
wheelchair for use by invalids, of the type which is
adapted to be controlled by an attendant walking behind
the wheelchair, such a wheelchair is hereinafter referred
to as "an attendant controlled wheelchair".

The control means of the present invention is particularly adapted for use with electrically powered
vehicles in which the steering of the vehicle is caused
by, or assisted by supplying different amounts of power
to driven wheels on respective sides of the vehicle. In
the case of an electrically powered vehicle having a
driven wheel on each side, each such driven wheel being
supplied with power by a respective electrical motor, if
only one motor is supplied with power the vehicle will
tend to turn in a direction away from the side of the
powered motor. For example, if a powered wheel on the
left-hand side of the vehicle is unenergised and a
powered wheel on the right-hand side is energised, the
vehicle will tend to turn in an anti-clockwise direction.

It is an object of the present invention to provide
improved control means in or for an electrically powered
vehicle.

According to one aspect of the present invention, we
provide control means in or for an electrically powered
vehicle, said control means being characterised in that
an elongate manually operable member is provided and is
adapted for mounting on the vehicle for at least limited
rotational movement about a first axis aligned with its
longitudinal axis in a first rotational direction from an "at rest" position to influence electrical energy supplied to a motor or motors adapted to motivate the vehicle, to cause the vehicle to turn in one direction, and in a second opposite rotational direction from said "at rest" position, to influence the electrical energy supplied to the motor or motors to cause the vehicle to turn in the opposite direction.

The manually operable member may be of tube-like configuration, and conveniently is of "twist-grip" form.

Preferably said manually operable member is biased into said "at rest" position by gravity or by resilient means, or by both.

Preferably speed control means are provided and adapted for mounting so as to be operable in association with said manually operable member in a manner such that said speed control means and said manually operable member may be operated together.

Preferably said speed control means is mounted for pivotal movement relative to said manually operable member.

Preferably said manually operable member has pivotally mounted thereon speed control means, said speed control means being adapted for pivotal movement from an "at rest" position in which no power is supplied to the motors, to an operative position in which power is supplied to the motors, there being a differential in the power supplied to the motors on movement of said manually operable member in either rotational direction from its "at rest" position.

Preferably said manually operable member is rotational about an axis which is approximately parallel to or slightly inclined to the ground on which the vehicle is supported. Such an axis will hereinafter be referred to as "generally horizontal".

The manually operable member is preferably a tube-like part co-axially mounted on a further tube-like part, said rotational movement being provided about the respective longitudinal axes of said tube-like parts.
Conveniently, said manually operable member is of "twist-grip" form.

Said means for biasing the manually operable member
to its "at rest" position may be provided internally of
the manually operable member and can conveniently
comprise co-operating cam parts, one cam being associated
with the manually operable member, the other with the
further tube-like part, the arrangement being such that
movement of the manually operable member from its "at
rest" position causes movement of one of said cam parts
axially along said rotational axis, such axial movement
being adapted to cause compression of a resilient means
such as a helical spring.

Preferably said speed control means is adapted to
cause operation of a plurality of switch means, which
switch means cause the completion of a circuit whereby
electrical energy is supplied to the motors, or is
disconnected therefrom, as the case may be, operation of
said manually operable member from its "at rest" position
influencing the operation of said switch means in a
manner to cause more electrical energy to be supplied to
a motor or motors driving one side of the vehicle than
the other.

According to another aspect of the present
invention, we provide an electrically powered wheelchair
for use by invalids having at least one driven wheel on
each side of the vehicle, each driven wheel being
provided with and driven by a respective motor characterised in that control means are provided comprising an
elongate manually operable member mounted for at least
limited rotational movement about its longitudinal axis
from an "at rest" position in a first direction, whereby
one motor is supplied with more electrical energy than
the other, and in a second rotational direction from said
"at rest" position, in which position said other motor is
supplied with more electrical energy than said one motor.

The wheelchair may be an attendant controlled wheelchair, said wheelchair including a pair of elongate handles extending from the rear of the wheelchair in a manner such that an attendant can hold onto the wheelchair, characterised in that one of said elongate handles is mounted for at least limited rotation about its longitudinal axis from an "at rest" position, in a first rotational direction to enable more power to be supplied to one motor than the other to cause the wheelchair to turn in one direction, and in the opposite rotational direction from its "at rest" position to enable more power to be supplied to the other of the motors, to cause said wheelchair to turn in the other direction.

The invention will now be described in more detail by way of example only, with reference to the accompanying drawings wherein:-

FIGURE 1 is a perspective view of a wheelchair for use by invalids;

FIGURE 2 is a view, partly in section, of the control means;

FIGURE 3 is another view of the control means shown in Figure 2;

FIGURE 4 shows different views of one of the cam parts of the biasing means;

FIGURE 5 shows views of the other of the cam parts of the biasing means;

FIGURE 6 shows views of an end part of the control means.

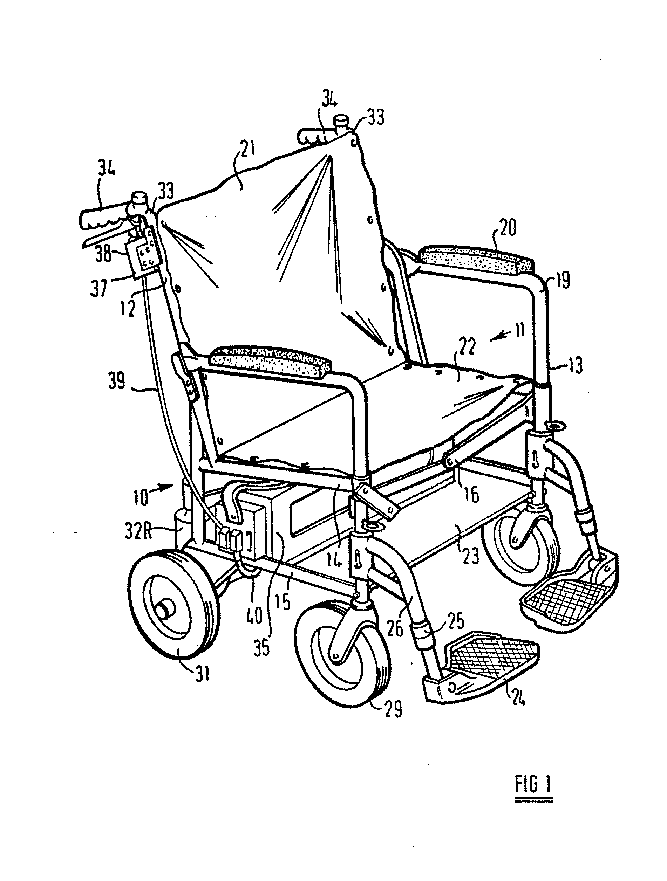

Referring first to Figure 1, the wheelchair illustrated comprises a frame construction which includes a pair of side frames 10 and 11, each of the frames 10 and 11 including a back upright member 12 of tubular construction, a front upright member 13 also of tubular construction and a pair of tubular members 14 and 15 interconnecting the front and back members 12.

Three linkages 16, only one of which is shown, interconnect the frame assemblies 10 and 11. Each link 16 includes a pair of pivotally connected links which can be moved through an overcentre position to the position shown in Figure 1 in which they serve to maintain the side frames 10 and 11 in spaced relationship.

An arm rest 19 having a pad 20 is attached to each of the side frames 10 and 11.

A sheet 21 of flexible material is secured between the back members 12 and the side frames to form a back rest. A further sheet 22 of flexible material is secured between the upper tubular members 14 to provide the seat portion of the chair and an additional sheet 23 also of flexible material is secured between the lower tubular members 15 to provide a parcel shelf.

Footrests 24 are connected by clips 25 to support members 26 which are connected to the frame members 13 of the side frames 10 and 11. The front wheels of the wheelchair comprise a pair of castor wheels 29 pivotally secured at the lower ends of the tubular front members 13.

The rear wheels of the wheelchair comprise a pair of driving wheels 31, only one of which is shown, mounted at the rear of the chair. The wheels can have either pneumatic tyres or solid rubber tyres. The driving wheels 31 are driven by respective electric motors 32L and 32R which may be of a permanent magnet type and mounted relative to the wheel as described and claimed in British Patent Specification 1,198,905.

Extending from the rear of the wheelchair are a pair of handles 33 by means of which the wheelchair can be controlled by an attendant walking behind the wheelchair. Each of the handles 33 have a grip 34.

Secured to one of the uprights 12 there is a control box 37. The control box 37 is provided with an "on/off" switch 38.

The control box 37 is connected to batteries 35 and motors 32 through cables 39 and 40.

0096098

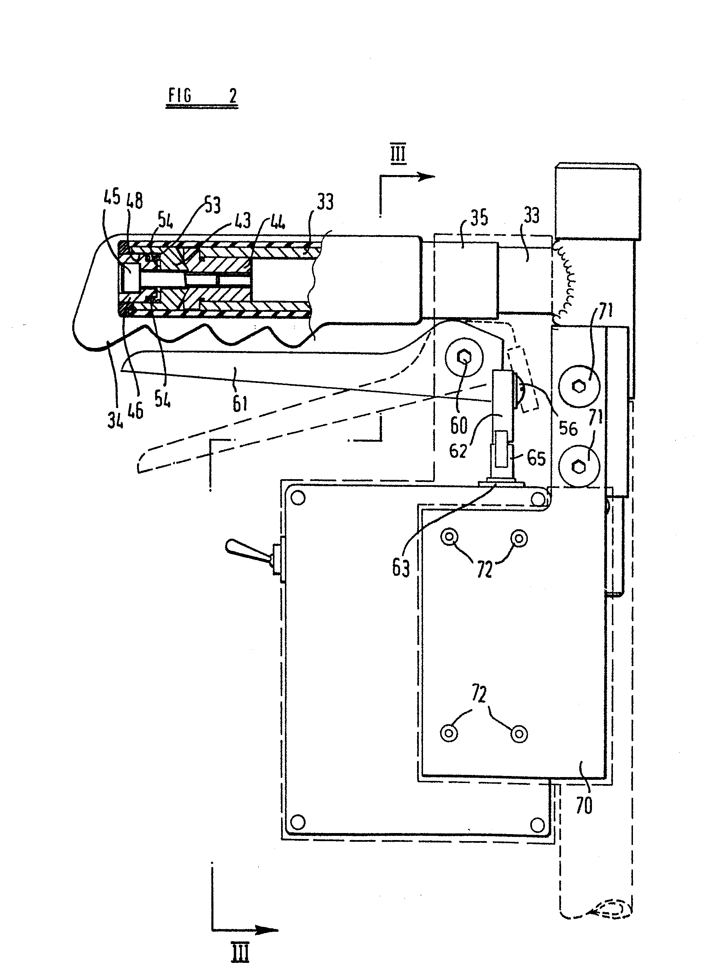

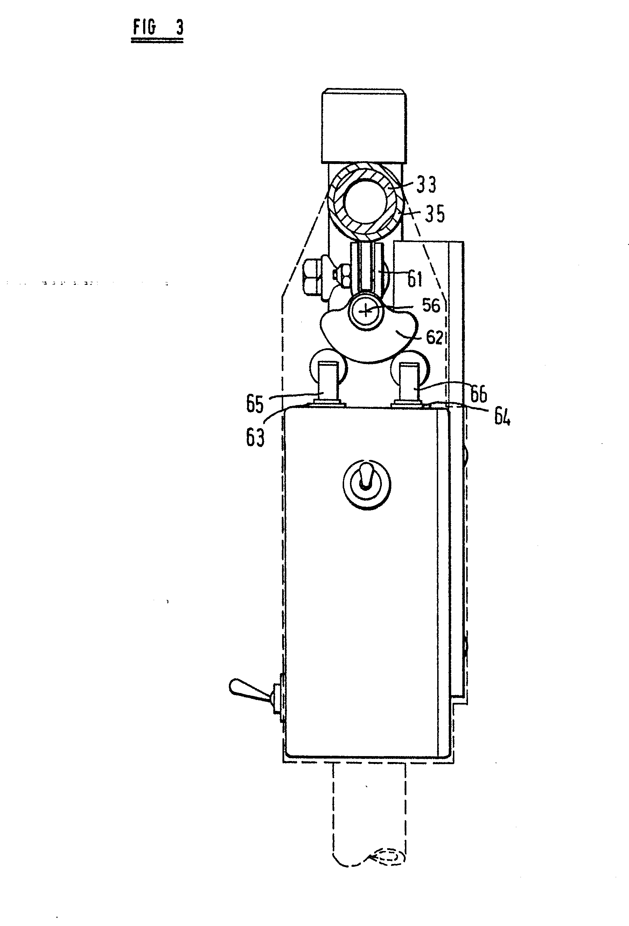

The handle 33 connected to the control box 37 will now be described in more detail with reference to Figures 2 and 3.

The control means comprises an elongate tube-like member 35 which is mounted co-axially on the handle 33 in a manner such that limited relative rotational movement between the tube-like part 35 and the further tube-like handle part 33 may take place about axis 41. The control member 35 is biased to an "at rest" position by biasing means generally indicated at 42, which biasing means comprises a first cam part 43 rotationally fixed but axially movable relative to the member 35, and a second cam part 44 which is both axially and rotationally fixed in the further tube-like handle part 33.

The control member 35 is secured to the handle 33 by means of threaded fastener 45, the head of which engages an end plug 46 secured to the end of the tube-like part forming the control member 35. The threaded part of the fastener 45 engages the second cam part 44.

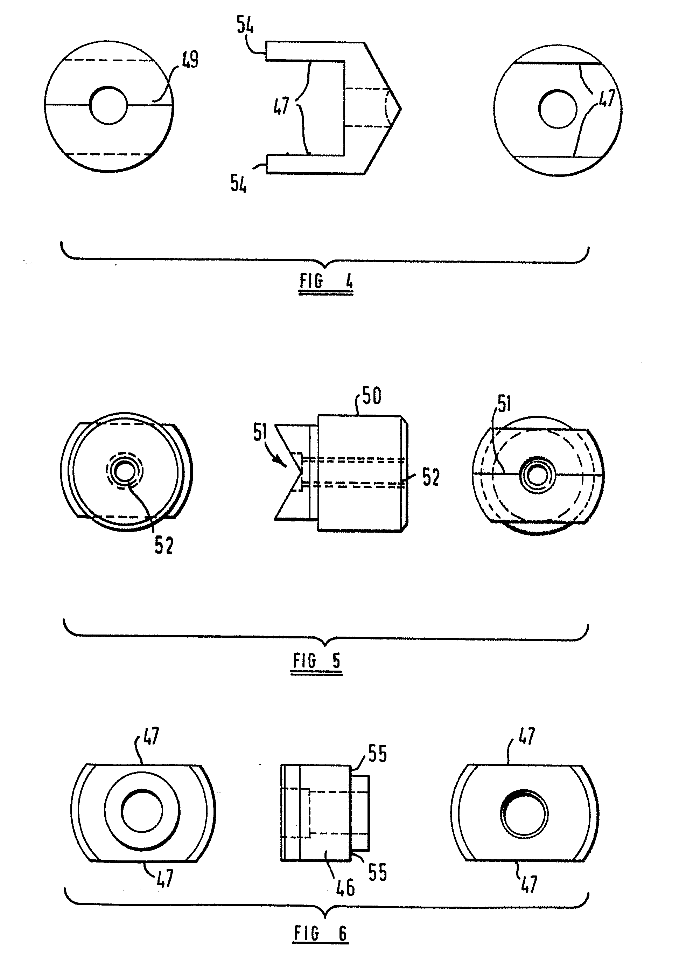

The first cam part is illustrated more clearly in Figure 4 and has a pair of flat surfaces 47 which can slide over flat surfaces 48 provided on the end cap 46 and a V-shaped cam surface 49.

The second cam part as shown in Figure 5 has a cylindrical surface 50 by means of which it is secured in the tube-like handle part 33 and a V-shaped cam face 51. A through bore 52 is provided into which a fastener 45 passes and threadedly engages the cylindrical surface thereof.

A helical spring 53 is provided and which acts between the first cam part 43 and the end cap 46 to cause the first cam part 43 to be positioned relative to the second cam part 44 as shown in Figure 2, and biassing the cam part 43 against any movement away from that position.

Any rotational movement of the control member 35 relative to the tube-like handle part 33 about the axis 41 will cause rotational movement between the cam parts 43 and 44 which in turn will cause axial movement between the cam parts 43 and 44 thus compressing the helical spring 53. When the surfaces 54 of the first cam part abut the surfaces 55 of the end cap, any further rotation in that direction will be prevented.

The assembly thus allows for limited rotational movement from the "at rest" position in either rotational direction.

Pivotally mounted on the control member 35 about pivotal axis 60 is a lever 61 having an "on" position shown in bold outline and an "off" position shown in dotted outline. Biasing means may be provided to bias the lever 61 to its "off" position, such biasing means may comprise the weight distribution of the lever itself whereby, unless influenced by external forces other than gravity, it will take up the position shown in dotted outline. Resilient bearing means such as a spring may also or alternatively be provided.

Connected to the lever 61 is an operating plate 62. The operating plate 62 is adapted when the lever 61 is in its "on" position to cause operation of microswitches 63 and 64, the arrangement being such that as the lever 61 is brought nearer to the control member 35 i.e. is "squeezed", the operating plate 62 presses down on the wheels carrying plungers 65 and 66 of respective microswitches 63 and 64.

The wheels provided on plungers 65 and 66 assist in the smooth operation of the control means but are not essential to the operation thereof.

Pressing down the operating plungers 65 and 66 switch on microswitchs 63 and 64 and enable power to be supplied to the two motors 32L and 32R thus causing the wheelchair to move in a forward straight ahead direction.

The operating plate 62 is connected to the lever 61 by a fastener 56.

If the control member 35 is rotated in a clockwise direction while the lever 61 is depressed to cause

**0096098**

movement of the wheelchair, the plate 62 will be rotated about the longitudinal pivotal axis of the control member 35 and the operating plunger 65 of microswitch 63 is still depressed or possibly depressed even further while the operating plunger 66 of microswitch 64 is no longer depressed or is depressed to a lesser extent.

If the microswitch 64 is connected to the right-hand motor and the microswitch 63 is connected to the left-hand motor, and they operate to either interrupt or connect the power supplied to said motor, then clockwise rotation of the operating member 35 wil cause the wheelchair to turn to the right and similarly anti-clockwise rotation of the operating member 35 will have the effect of maintaining pressure on the plunger 66 or increasing the pressure and depressing the plunger further while decreasing the pressure on plunger 65 or removing the plate 62 completely out of contact therefrom, thus providing greater power to the motor 32R and turning the vehicle to the left.

The control box 37 is shown as being connected to the upright 12 by means of a plate 70 by means of fasteners 71 and 72. However it is envisaged that it may be placed at any other suitable alternative position.

It is not essential that the control box is placed in proximity to the control member 35 since the microswitches or other switch means, whether mechanical or electronic, be operated by remote control, for example by means of a Bowden cable in response to operation of the control member 35 and lever 61.

It is further envisaged that the control member 35 could rotate and cause rotation of the spindle of a variable resistor which in turn would alter the distribution of power supplied to the motors 32L and 32R on respective sides of the wheelchair through an electronic control circuit. Similarly, the control lever 61 could also cause operation of one or more variable resistors to cause power to be supplied to the motors in an infinitely variable manner from an "off" position to a position of maximum power.

The microswitches 63 and 64 shown, on the control box 37, may each have more than one pair of contacts and be operable so that when the operating plungers 65 and 66 are depressed by a first amount, a first pair of contacts is operated, and then when the plungers of 65 and 66 are depressed further, a second pair of contacts are operated so that the power supplied to the motors driving the wheelchair can be increased in stages to enhance smoother operation in use of the wheelchair.

As a further alternative, the operating plate 62 can be replaced by a substantially flat plate or other operating member connected to the lever 61 through a universal joint or a flexible joint such as a rubber or plastics joint, movement of the operating plate or operating member being provided by a spigot attached to the plate or operating member and extending into a bore in a bush situated between the microswitches 63 and 64.

With such an operating plate or member, the plate itself is rocked on movement of the control member 35 from its at rest position in the clockwise or anti-clockwise direction and the same control of the vehicle is attained. The wheels provided on the plungers 65 and 66 and microswitches 63 and 64 respectively are not then necessary.

CLAIMS:

1.    Control means in or for an electrically powered vehicle, said control means characterised in that an elongate manually operable member (35) is provided and adapted for mounting on the vehicle for at least limited rotational movement about a first axis aligned with its longitudinal axis in a first rotational direction from an "at rest" position to influence electrical energy supplied to a motor or motors (32) adapted to motivate the vehicle, to cause the vehicle to turn in one direction, and in a second opposite rotational direction from said "at rest" position, to influence the electrical energy supplied to the motor or motors (32) to cause the vehicle to turn in the opposite direction.

2.    Control means as claimed in Claim 1 characterised in that said manually operable member (35) is of "twist-grip" form.

3.    Control means as claimed in Claim 1 or Claim 2 characterised in that biasing means (53) are provided to bias said manually operable member (35) into said "at rest" position.

4.    Control means as claimed in any one of the preceding claims characterised in that speed control means (61) is provided and is mounted so as to be operable in association with said manually operable member (35) in a manner such that said speed control means (61) and said manually operable member (35) may be operated together.

5.    Control means as claimed in Claim 4 characterised in that said speed control means (61) is mounted on, for pivotal movement relative to, said manually operable member (35).

6.    Control means as claimed in Claim 5 characterised in that said speed control means (61) is adapted for pivotal movement from an "at rest" position in which no power is supplied to motors (32L, 32R) driving respective wheels on opposite sides of the vehicle, to an operative position in which power is supplied to the motors (32L, 32R), there being a differential in the power supplied to the motors on movement of said manually operable member in either rotational direction from its "at rest" position.

7.    Control means as claimed in any one of the preceding claims characterised in that said manually operable member (35) is adapted for mounting or is mounted on said vehicle for rotation about an axis which is approximately parallel to or slightly inclined to the ground on which said vehicle is supported.

8.    Control means as claimed in Claim 4 characterised in that said speed control means (61) is adapted to cause operation of a plurality of switch means (63, 64), which switch means (63,64) cause the completion of a circuit whereby electrical energy is supplied to a pair of motors (32L, 32R) each driving a respective wheel on opposite sides of the vehicle, or is disconnected therefrom, operation of said manually operable member from its "at rest" position influencing the operation of said switch means (63,64) in a manner to cause more electrical energy to be supplied to the motor driving a wheel one side of the vehicle than the motor driving a wheel on the other side of the vehicle.

9.    An electrically powered wheelchair for use by invalids having at least one driven wheel (31) on each side of the vehicle, each driven wheel being provided with and driven by a respective motor (32L, 32R) characterised in that control means are provided comprising an elongate manually operable member (35) mounted for at least limited rotational movement about its longitudinal axis from an "at rest" position in a first direction, whereby one motor is supplied with more electrical energy than the other, and in a second rotational direction from said "at rest" position, in which position said other motor is supplied with more electrical energy than said one motor.

10. An electrically powered wheelchair as claimed in Claim 9, said wheelchair comprising an attendant controlled wheelchair, said wheelchair including a pair of elongate handles (34) extending from the rear of the wheelchair in a manner such that an attendant can hold onto the wheelchair, characterised in that one of said elongate handles (34) is mounted for at least limited rotation about its longitudinal axis from an "at rest" position, in a first rotational direction to enable more power to be supplied to one motor than the other to cause the wheelchair to turn in one direction, and in the opposite rotational direction from its "at rest" position to enable more power to be supplied to the other of the motors, to cause said wheelchair to turn in the other direction.

FIG 1

FIG 2

FIG 3

0096098

4/4

FIG 4

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 581 231 (BIDDLE)  *Page 1, lines 42-58; page 3, lines 67-101; page 4, lines 85-97; page 5, lines 124-130; page 6, first paragraph; figures 1,5* | 1,4,5 7-10 | A 61 G 5/04 B 62 D 51/04 B 60 K 1/02 |
| A | US-A-3 802 524 (SEIDEL)  *Column 1, first paragraph; column 4, lines 24-68; column 5, lines 1-20; figures 1,5* | 1,4,7-10 | |
| A | GB-A-1 353 704 (HOLLIS) *Page 2, lines 114-126; page 4, last paragraph; page 5, lines 1-28; figures 1,2* | 1,7 | |
| A | GB-A- 836 900 (WITHNELL) *Page 3, lines 119-130; page 4, lines 1-33; figures 1-4* | 2,3 | TECHNICAL FIELDS SEARCHED (Int. Cl. ³) |
| A | GB-A- 556 451 (GREEVES) *Page 2, lines 47-63; figures 1,2* | 2,5 | A 61 G B 62 D B 60 K |
| A | FR-A-2 310 742 (BIDDLE) *Page 4, lines 15-37; page 5, complete; page 6, lines 1-6; figures 1-4* | 6,8 | |

-/-

The present search report has been drawn up for all claims

| Place of search | Date of completion of the search | Examiner |
|---|---|---|
| THE HAGUE | 24-02-1983 | MAROSCIA A. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | US-A-3 704 758 (CROPP) | | |
| A | US-A-4 287 959 (INMAN) | | |
| A | US-A-3 871 464 (EDEN) | | |

**TECHNICAL FIELDS SEARCHED (Int. Cl. ³)**

The present search report has been drawn up for all claims

| Place of search | Date of completion of the search | Examiner |
|---|---|---|
| THE HAGUE | 24-02-1983 | MAROSCIA A. |